Europäisches Patentamt

European Patent Office

Office européen des brevets

(19)

(11) Publication number:

**0 100 092**
A2

(12)

# EUROPEAN PATENT APPLICATION

(21) Application number: **83107336.6**

(22) Date of filing: **25.07.83**

(51) Int. Cl.³: **H 04 L 11/20**

(30) Priority: **27.07.82 IT 6794482**

(43) Date of publication of application: **08.02.84**
Bulletin 84/6

(84) Designated Contracting States: **AT BE CH DE FR GB LI NL SE**

(71) Applicant: **CSELT Centro Studi e Laboratori Telecomunicazioni S.p.A., Via Guglielmo Reiss Romoli, 274, I-10148 Turin (IT)**

(72) Inventor: **Demichelis, Carlos, Via M.te Ortigara 6, Torino (IT)**
Inventor: **Mancini, Paolo, Fraz. Ceretta Via Canonico Maffei 163, San Maurizio Can.se (TO) (IT)**
Inventor: **Mattone, Paolo, Via Saorgio 93 bis, Torino (IT)**

(74) Representative: **Riederer Freiherr von Paar zu Schönau, Anton et al, Freyung 615 Postfach 2664, D-8300 Landshut (DE)**

(54) **Multiple communication interface between processor and digital transmission means.**

(57) A multiple communications interface between processor and digital transmission means, such as a serial 32-channel 64 Kbit/s PCM group, able to utilize the group channels as an equal number of two-way communications paths between the processor and other nodes of a data communications system. Each path can be used for the interchange of data messages according to dialogue procedures of HDLC type, such as X25, X75 and No. 7 of CCITT.

**PATENTANWÄLTE**

0100092

.Dipl.-Ing. Anton Freiherr
**Riederer von Paar**

D-8300 Landshut
Postfach 2664, Freyung 615
☏ Landshut (0871) 22170
Fax (CCITT 2) 2 min, manuell
Telex 58441 glala d

Frhr. Riederer v. Paar, Postfach 2664, D-8300 Landshut

CSELT
Centro Studi e Laboratori
Telecomunicazioni S.p.A.
Via Guglielmo Reiss Romoli, 274

I- 10148 Torino

Partner in München:
**DIEHL & KRESSIN**
Dr. H. O. Diehl, Dr. H-R. Kressin
☏ München (089) 177061
Fax (089) 177461 (autom.)
Telex 5215145 Zeus d

## Multiple Communication Interface
## between Processor and Digital Transmission Means

### 1 Description

The present invention relates to data transmission between processors interconnected by PCM network and in particular it relates to a multiple communication interface between processor and digital transmission means.

In multiprocessor systems of loosely coupled type, operating within digital switching units, in processor or multiprocessor systems handling the packet switching, and generally when in PCM networks a processor is to exchange messages with the outside or with other processors, it proves necessary to have bidirectional gates towards the PCM network in order to allow the data to be transferred from the memory unit and vice versa, according to pre-determined dialogue protocols. The use of channels offered by PCM 64 Kbit/s network is suited to each of these paths.

On one side it is of interest to dispose of a large number of these paths, for instance in case of a loosely coupled multiprocessor system operating in the packet switching domain. In this case each processor needs access gates for the data to be transferred to and from the outside as well as communication paths, each consisting also of a plurality of channels, towards the other processors. On the other side, the present state of the art presents a lot of problems when the number of said gates is high. In fact each gate acts as a peripheral unit of a rather complex type for the processor. It must handle the lowest levels

- 2 -

of the communication protocol which the processor could not do, chiefly when there is a plurality of gates: in fact that would entail too many repetitive tasks.

Data interchange between the periphery and the processor memory can take place in various ways,i. e. : by sense line, interrupt direct memory access; sense line and interrupt procedures can provide the storage into the peripheral unit at a byte level or at a message level, into a FIFO or into a double access type memory, the whole for both transmission directions.

In case of sense-line operation a data storage at the byte level into the interface does not prove convenient, in fact, in case of many storage operations, the processor ought to continuously execute tests of data ready and of data received, as well as to control the line conditions; positive tests ought then to be followed by the instruction of byte transfer.

Still in this case, to store the data at the message level, each interface is to be equipped with a memory sufficient to contain two starting and two arriving messages in order to ensure the complete use of the channel, while the tests on the arriving messages must be rather frequent in order to avoid useless waits when the message is short.

Using the interrupt procedure, if the data to be stored are organized into bytes, it proves difficult to meet the interrupt requirements during traffic peaks, while if the data are organized into messages, the storage is still burdensome. . Test elimination entails the introduction of many interrupt sources, whose number is limited by the processor structure. With both the preceding techniques, if a message is to be forwarded through a plurality of output gates, it is to be transferred by the processor into the buffer of each of them and, if a message is to transit from a gate to another, it is to be first transferred from the input buffer to the memory and from the memory into the output buffer. Furthermore, the output buffer cannot hold messages waiting for checking , unless it has a sufficiently high capacity, and in particular, if it is a memory of the FIFO type.

By the use of the "direct memory access" technique the storage into the peripheral unit proves no longer necessary: which is an advantage, even though for each incoming channel a suitable memory area is to be preset. This area is assigned time by time by the processor and is ready to receive a possible message. The number of access requests to the bus, that the processor is to meet, is however very high, in particular in rush hours. In this way, just when the processor is to present the maximum processing capacity, it slackens and is also to control the message buffer. Moreover the number of interrupt sources (or the number of tests to carry out) necessary to the information relating to the received or transmitted complete messages is not diminished.

In each of the cases axamined no possibility exists of controlling the good functioning of the interfaces on the line, but the service has to be interrupted on the channel during the test duration.

The present invention obviates the above disadvantages and solves the problems described by a multiple communication interface between processor and digital transmission means, which is capable of processing a data flow at 2.048 Mbit/s corresponding to 32 64 Kbit/s PCM channels, by supplying the processor with already preprocessed complete messages. It allows for the use of the PCM network in the complete-mesh configuration between processors and in the star configuration between the message or packet sources, or the use of switched channels, with the address carried by the channel 0 when it is not used for the transmission of synchronism information.

It carries out the part of work which relates to the transfer from and towards the processor memory so as to avoid possible overflows. In particular, it effects the level 1 and the part of level 2, that does not concern the packet switching, of the protocols of HDLC type, such as X25, X75 and n. 7 of CCITT, and in general any type of protocol which uses a frame format compatible with that of the above protocols.

Since the 32 paths are controlled by a single logic circuit, it there is a single point of data transfer from and towards the processor, which, to every purpose sees a single peripheral unit; the data exchange preferably takes place through a common memory area of the "bi-port" type which the interface logic circuits access for all the channels from a single gate without conflicts between incoming and out going channels. The memory, which is the message buffer can be dimensioned in function of the actual traffic to process,but not in function of the channels.

The single interface, with single buffer, offers a flexibility of use impossible with separate interfaces, as it will be made apparent by the description of the operation. Moreover,if one of the channels is connected to itself by PCM network, the processor can control the operation of the complete logic unit through the loop thus obtained without any service interruption.

The present invention provides a multiple communication interface between processor and digital transmission means, such as a 32 channel 64 kbit/s PCM group belonging to a data communications system, which operates as a processor peripheral unit,which is able to control the group channels as communication bidirectional paths between the processor and other nodes of the system, each path being usable for the exchange of data organized into messages according to dialogue procedures of the high level type, and which comprises:

- a first plurality of circuits, for the simultaneous processing of incoming channels;

- a second plurality of circuits, for generating the outgoing channels;

- a third plurality of circuits for the temporaneous storage of the information arriving from said first plurality of circuits and the transfer of information arriving from a microprogrammed logic unit, towards said second circuit plurality;

- a fourth plurality of circuits for message storage and the exchange of information with the processor;

- a fast microprogrammed logic unit, able to control the allocation in the memory of incoming and outgoing messages, to transfer in real time the data from the memory to transmitting circuits and from the receiving circuits to the memory, to count the significant bits of each received or transmitted message, to check the compatibility of the number of bits of each message with the rules of the used dialogue procedure, to signal   the processor the occurred reception of the messages, the events on the communications paths and their transitions, to interpret and carry out the commands coming from the processor, such as the transmission order of a message, enabling and inhibiting of the communications paths, transition on communications paths, requests of availability of a memory area into which to load a message to transmit, filtering and generation of stuffing messages.

The foregoing and other characteristics of the present invention will be made clearer by the following description of a preferred embodiment thereof    given by way of example and not in a limiting sense, and by the annexed drawings in which:

- Fig. 1 is a general block diagram of the multiple interface;
- Fig. 2 is a block diagram of the block denoted by DSC in Fig. 1;
- Fig. 3 is a block diagram of the block denoted by LMT in Fig. 1;
- Fig. 4 is a block diagram of the block denoted by BTT in Fig. 1;
- Fig. 5 is a block diagram of the block denoted by LVI in Fig. 1;
- Fig. 6 is a block diagram of the block denoted by LVO in Fig. 1.

The   interface   described hereinafter is to be located between a processor and a serial 2.048 Mbit/s PCM group, processing the 32 incoming and outgoing channels such as bidirectional communication paths between the network and the processor; as to the interface, the two transmission directions are independent of each other for each channel.

In the case in which protocols X25,  X75 are used, all the 32 channels can be activated at the same time and the interface can handle, in both directions, the maximum traffic compatible with the group capacity.

If on the contrary protocol n. 7 is used the greater complexity of the operations carried out by the interface limits to 16 the bidirectional channels which can be active at the same time. Said 16 channels can be chosen out of the 32 and can be changed even during the operation, without requiring a new interface initialization.

The passage from one to the other way of operation is obtained by acting on a manually-operated switch, which selects one of the two microprograms present. Another switch allows, in both cases, the transparent way of operation for channels 0 and 16: in this case, at each PCM frame, the contents of these arriving channels is simply transferred into two fixed locations of the memory, without making any operation on it; vice versa the contents of two further fixed locations of the memory is transferred on channels 0 and 16 of each starting frame.

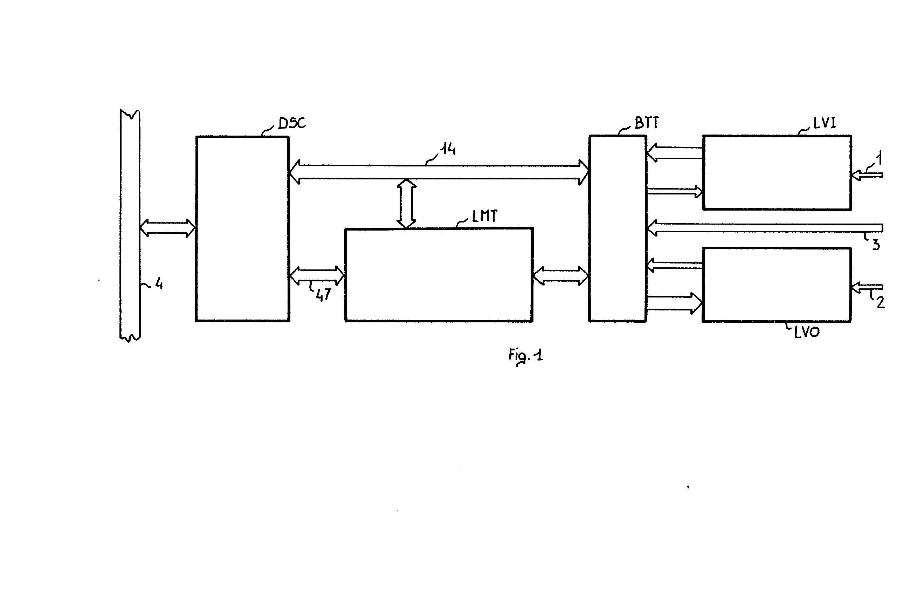

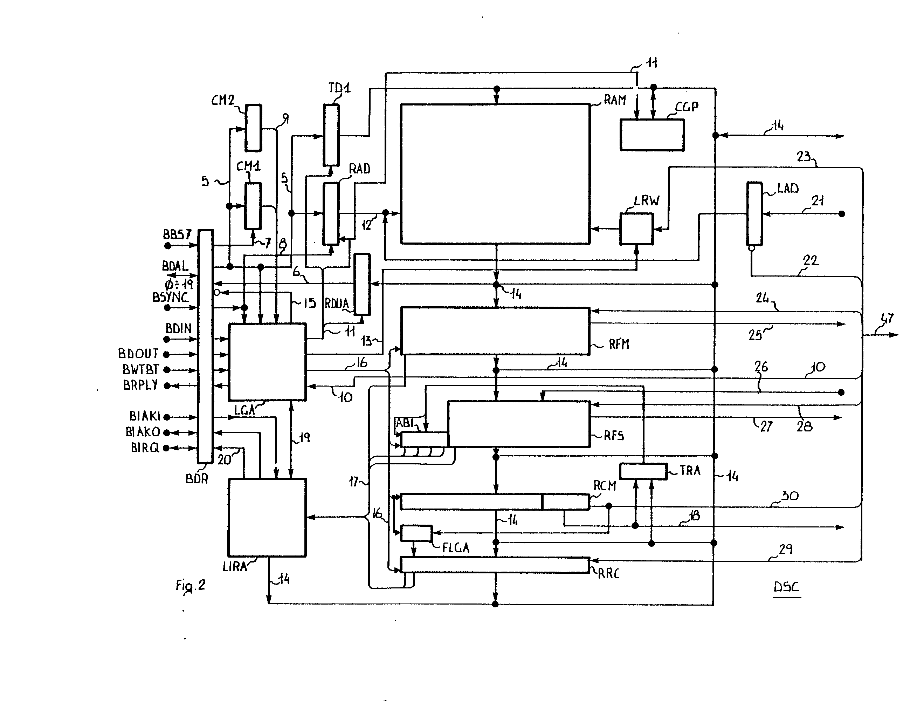

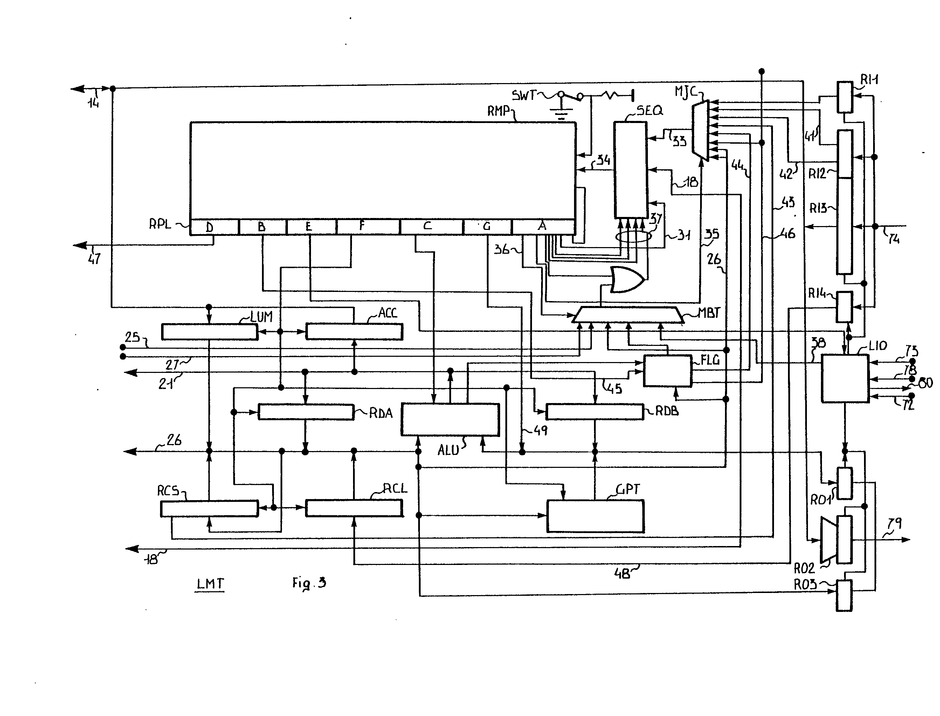

The interface consists of 5 operational blocks, according to the general block diagram of Fig. 1.

Before describing in details the main-block structure we will examine from a general point of view the characteristics of the whole interface operation.

Block DSC is the area of exchange of data, of signals and commands through the bus of the processor, denoted by 4, and comprises the following circuits:

- a fast bi-port memory-bank (Fig. 2, RAM), with time-division access, having a capacity of 32 kwords; the most part of the memory areas is intended for message or packet storage. To this purpose it is ideally subdivided into sectors, into which either an incoming or outgoing packet or message can be stored. The remaining part of the memory areas contains the working tables and the registers of the logic unit which controls the whole bank. The subdivision into sectors and the number of working tables, generated by the interface itself at its initialization, are different for the two types of operation. The message sectors are dynamically assigned to the channels and each of them is usable each time both for reception and transmission.

The beginning word of the sector contains the originating channel or the message destination and the number of bits it is composed of. The message, within the sector, does not contain flags, stuffing zeros and the cyclic redundancy code.

- A signalling FIFO memory for the received or transmitted messages (Fig. 2, RFM), to be accessed by the processor as a usual register of one of its peripheral units and identified hereinafter as Register 0 of the unit. This memory only read by the processor, carries a) the number of the sector by which a message has been transmitted or received, b) the reception/transmission bit and c) the result code of the controls executed on the transmission or reception operations.

- A signalling FIFO memory for the transitions of the central logic circuits on the channels (Fig. 2, RFS and ABI), considered by the processor still as register, hereinafter indicated by Register 2, only read by the processor.

- A register of the commands coming from the processor (Fig. 2, RCM) identified as Register 4, only written by the processor which carries the command code of the processor and the possible associated information (number of sector or number of channel or new state of the enablings to generate interrupts).

- A register of the sectors available to the processor (Fig. 2 RRC), identified as Register 6, only read by the processor, which carries the number of sector which, upon request, the interface renders available.

- A circuit generating the interrupts (Fig. 2, LIRA), associated to each of the 4 preceding registers and which can be enabled independently by the processor. Each register carries a "data ready" bit, while the "received data" bit of Register 4, only written by the processor, is on register 6; the reading of Register 0 and 2 (FIFO) automatically cancels the information with the exception of the indication of interrupt enable (this indication is loaded into Register 4 by the processor and automatically is transferred to Register 2).

- A microprogram-controlled circuit (Fig. 2, LGA), which controls the accesses to the already-described memory elements.

Block LMT is the microprogrammed logic unit for fast transfer between memory and line circuits and for data flow control. It consists of:

- a PROM (Fig. 3, RMP), with relative pipeline register (Fig. 3, RPL) which contains the two microprograms for X25, X75 and for No. 7

- a sequencing logic circuit, composed of a sequencer (Fig. 3, SEQ) a multiplexer for bits under test (Fig. 3, MBT), a multiplexer for the jumps and microprogram flags (Fig. 3, MIC); it operates on cycles of 122 ns and locks on PCM channel times (period 4 $\mu$s 32 microinstructions).

- An arithmetic logic unit (Fig. 3 ALU) with a series of work registers and, separated for rate reasons, a logic unit for controlling the pointers at the free-sector table. The tables used by this unit are contained in the bi-port memory, as already mentioned.

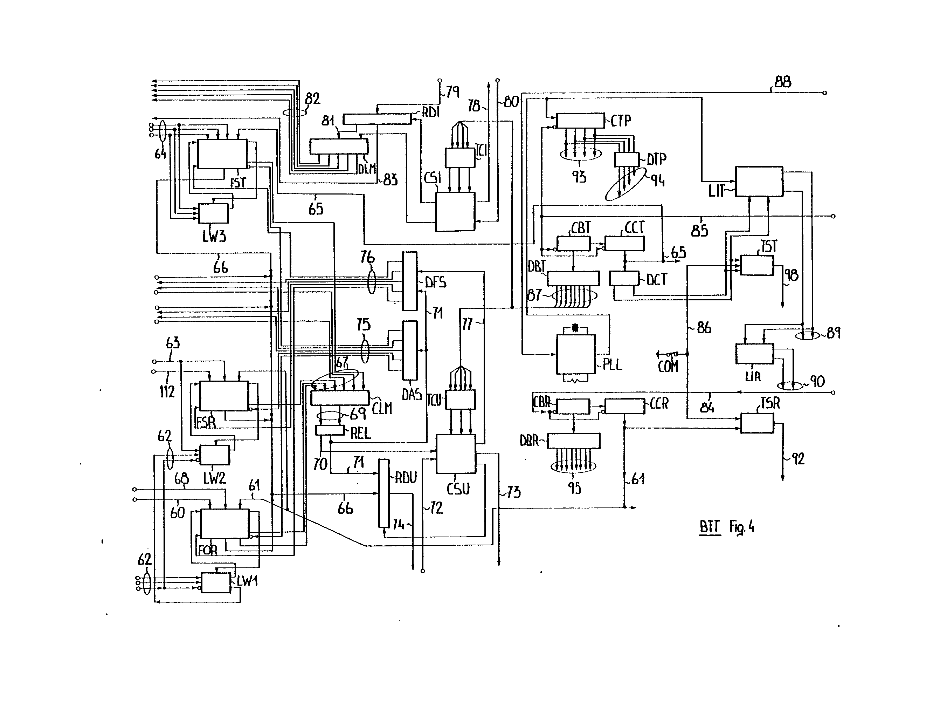

Block BTT contains the temporary buffers of signallings (Fig. 4 FST, FSR) and of data assembled into characters (Fig. 4, FOR) per each channel arriving from the line circuits; these buffers are FIFO-organized and act as registers when logic circuit LMT is to execute long operations (as a rule they are effected at the beginning or at the end of the messages).

The time-base of the system, which uses an 8.192 MHz oscillator locked to the 2.048 MHz clock of the PCM group, receives also the incoming and outgoing synchronism signals from connection 3, whenever they are available where the interface is connected, in particular in the digital switching network. Otherwise, clock and synchronism signals are locally detected and generated.

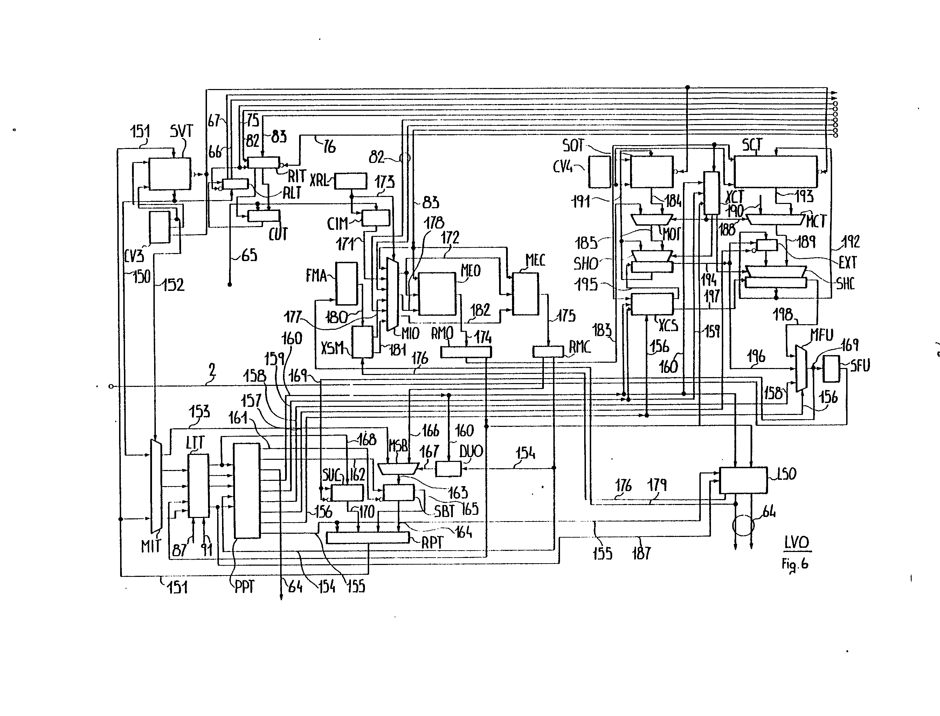

Blocks LVI and LVO (Fig3 and 6) are the fast logic circuits which act at the bit level and operate on the PCM flow entering wire 1 and, respectively, generate the flow outgoing on wire 2. They are both subdivided into three parts: an operative logic circuit, a horizontal shift register of current channel on which the logic circuit works, a series of vertical shift registers for the temporary storage of the situation relating to the other channels of the group.

The output block LVO has the following tasks:

- Recognition of the "start of message" command;
- Flag generation;
- Request for octets to be transmitted;
- Insertion of stuffing zeros;
- Check for a possible underrun;
- Recognition of end-of-message and of the length of the residual byte;
- CRC computation and transmission;
- Recognition of a possible order of end-of-message without CRC;
- Recognition and execution of ABORT, IDLE, continuous FLAG commands;
- Communications upon request of the current state of an outgoing channel.

The input block LVI has the following tasks:

- Recognition of message start;
- Flag recognition;
- Assembling of the received bits in octet formats;
- Cancellation of stuffing zeros;
- Check of the possible overrun;
- Recognition of the end-of-message and of the length of the residual byte;
- CRC check;
- Recognition of a possible ABORT and of transitions;
- Inhibiting and enabling, upon request, of reception of an incoming channel;
- Communication upon request, of the current state of an incoming channel.

This block also checks the received message format, which is to be at least 4 bytes long (X25 - X75). In case of use of protocol No. 7

0100092

it communicates the byte arrival even on the channels in state of "flag search".

Let us see now the operation of the interface when protocols X25-X75 are used.

When signal INIT appears on bus 4, the interface inhibits the reception of all the incoming channels and sets all the outgoing channels in IDLE state (transmission of continuous "1s"). Then it identifies in the bi-port memory (Fig. 2 RAM) 256 sectors of 96 words each, it constructs a table of their initial addresses (table of the free sectors) and sets the pointer to the first free sector and the indicator of table length, then it prepares 6 tables of 32 registers each, whose tasks are: channel-sector association for input and output, current pointers to data sectors, counters of the number of bits transmitted or received. At this point it accepts the commands sent by the processor, which may already have enabled the suitable interrupts (the acceptance of this command is in fact automatic).

Then the processor, by a set of commands, enables the suitable incoming channels and activates (transmission of continuous flags) the suitable outgoing channels (the latter operation may be useless); thus the initialization phase ends.

When block LVI detects the arrival of a flag from an incoming channel, it begins to assemble the subsequent character: if this is still a flag LVI communicates the passage of the channel from idle to active state. The first character different from flag or ABORT, detected after a flag, is intended as a "1st octet of message", which LVI sents to logic circuit LMT. This associates the channel with the first free sector of its table, it prepares the writing pointer of the octets, it loads the octet starting from the second word of the sector and marks the arrival of 8 bits. Every time LVI assembles an octet, it communicates this operation to LMT which, in turn, transfers it to the memory, it updates the pointer and the number of bits received and verifies that this number does not exceed the maximum admitted length of the message. Whenever it takes place, logic circuit LMT disengages the channel from the sector, it rejects the octets received afterwards and sends    register 0 a signal of "end-of-message with non valid frame"; the sector remains at the disposal of the processor till  it requires its disengagement. In a normal  case,   on the contrary, at the arrival of the end-of-message flag, LVI checks the CRC loaded, checks the length of the last byte (whenever the message is not a multiple of 8 bits) and communicates the whole to the processor with the signal of "end-of-message", with said information LMT computes the number of actual useful bits loaded in the sector, it writes this number with the provenance channel in the first word of the sector, it disengages this sector from the channels and generates the "received packet" message, with the sector number and renders it available to the processor on Register 0. The sector remains busy from its association with the channel, to its release   the processor, meanwhile it remains at the disposal of the processor, which can use it also to demand the packet retransmission on another channel (by only changing the channel code in the first word) or for transmitting another message. If during reception an ABORT flag is detected, the corresponding signal is loaded into Register 2, the received data are left off  and the sector is disengaged and considered as free again; LVI resumes the flag search state. At the arrival of the 1st message octet, logic circuit LMT might have no further free sectors: in this case the message is left off and the corresponding signal for the processor is written in Register 2. Of course, the whole message is left off even though meanwhile the processor returns a number of sectors to the interface. When the processor is to emit a frame, in case it is not already present in the memory (e. g. when it has arrived from another group channel) it demands a free sector to the interface, which replies by rendering available on Register 6 the first address of the sector, after taking it off the table (should no further sectors be available, the corresponding signal would be presented on Register 2). The processor loads the frame above into said sector and afterwards writes the number of bits and the destination channel into the first word.

The processor demands the transmission from a sector by a suitable message; the interface reads its first word, it associates with it the indicated channel, it transfers the number of bits into the position corresponding to the channel of the relative table, it sets the reading pointer and sends the message start command to block LVO through BTT. If LVO is already emitting flags on the channel, it immediately requests the first octet to be transmitted, otherwise it generates a flag and requests the octet.

Afterwards, when the channel is in the state of transmission of a message LVO requires octets with an advance of about $125\,\mu s$ with respect to their transmission. At each request logic circuit LMT transfers the octet, it updates the pointer and decreases the number of bits to transmit; when the result of the latter operation is less than or equal to zero, immediately after the octet (or residual byte), logic circuit LMT gives to LVO the signal of end-of-message with the possible indication of the length of the residual byte.

Once transmitted the latter, LVO closes the message with the transmission of the computed CRC and of the flag. Unless there is a different command, it keeps then the channel in the state of "flag transmission". Whenever, during the transmission, an underrun situation intervenes, LVO closes the message with an ABORT flag and passes to transmit continuous flags.

The signals of correct or by underrun end-of-message, are communicated to the processor through Register 0; in any case the channel is disengaged from the sector and remains at the disposal of the processor.

The ABORT flag, during a transmission can be sent also on request of the processor; in this case LVO transmits it and passes to continuous flags and therefore it requires no more octets. The processor at any moment, can set an outgoing channel to the IDLE or ACTIVE state and can enable or inhibit an incoming channel. Every time the processor terminates the use of a sector, it gives the sector itself back to the interface with a suitable command of disengagement.

- 13 -

It is compulsory for the processor to wait for the signal of "transmitted message" on a channel before effecting on the same channel a new transmission (unless it closes the preceding one with an ABORT command). The processor has the possibility of requesting the contemporaneous transmission of the contents of a sector on many channels (whenever that could be useful) in the following way: after requesting the transmission from the sector, which carries the indication of the first of the channels, it changes this indication and requests the transmission again and so on. The acknowledgments of occurred transmission refer to the sector and not to the channel, hence in this case they are no longer univocal.

Let us now examine the operation of the interface in case a protocol No. 7 is used. When command INIT arrives, in addition to the inhibiting of the incoming channels and to the continuous transmission of "1s" on the outgoing channels, the interface carries out the initialization of the memory. In particular, it extracts 198 message sectors, each of 160 words, and constructs its table with the pointers as before.

It prepares for the outgoing channels the table of the channel-sector association, the table of the pointers, the table of the number of bits to be transmitted, and the table of the state words; for the incoming channels, it prepares the association table, the table of the pointers, the table of the number of bits received, the table of state words and the table of error counters.

Besides, for the filtering and transmission operations of stuffing and state messages which are repeated unchanged, it predisposes 32 sectors of 4 words strictly associated with the incoming channels and 64 sectors of 4 words strictly associated, two by two, with the outgoing channels.

All the tables relating to the channels always consist of 32 words, even though only 16 channels can be activated; this makes it possible to choose immediately 16 channels whatever and to change them during the operation, without the necessity of re-initialization

To start the procedure of initial alignment, the processor enables the reception on the suitable incoming channels. In this case LVI communicates the reception of octets on the channel, even when it is in the flag search phase.

After the initialization, logic circuit LMT considers the channel in state of alignment procedure interrupted and does not act on it. This holds true even though the channel passes to continuous flag reception (what is communicated to the processor). By a suitable command the processor sets the convenient error threshold on the channel (what will be always directly effected by the processor) and the error check procedure remains deactivated till the beginning of the message flow. The logic circuit will activate the procedure in the way "signalling unit check" at the arrival of the first message. It is a task of the logic circuit LMT the passage to the mode "octet counting" and vice versa, when it is necessary.

When block LVI communicates the reception of a first message octet, LMT verifies whether a sector has already been associated with the channel, otherwise it effects the association; then it executes the transfer, it updates the pointer and the number of bits received and moreover checks whether the first octet received is equal to the first octet contained in the 4 word sector associated with the incoming channel (this sector in fact is to store the first bytes of each message to allow the stuffing and state messages which are equal and repeated to be identified).

In case of equality, the situation "1st unchanged octet receiv-ed" is stored into the channel state word, otherwise the situation "1st octet of new message" is stored and the octet itself is loaded also into a stuffing/state sector.

Upon reception of the subsequent octets, besides the already examined operations, the logic circuit updates the state word up to the 5th byte received, which may be equal or pertain to a new message (the two bytes of CRC are also loaded, and then are eliminated, in case of stuffing message, as well as 4 bytes plus one of CRC or the 5 bytes in case of state message; the first 5 bytes of two information messages coming one after the next are certainly different from each other); meanwhile it carries out the check of admitted length. Finally it recognizes the reception of 7 bits with consecutive "1s " (or even more) communicated by LVI as ABORT, and the reception of end-of-message, which in that case has not to carry the indication of residual byte.

The operations which follow these events are equal to those carried out in case of protocols X25 - X75, apart from the case of reception of a stuffing message or of a state message equal to the preceding one, which is not communicated to the processor (the corresponding sector can still be reached by the subsequent message and hence it remains associated with the channel); the reception of a non integer or less than 5 (CRC included) number of octets causes the emission of a "non valid frame" signal; furthermore logic circuit LMT suitably operates on the error counter and can generate on Register 2 the signal of "exceeded threshold".

As to transmission, the processor has, as before, the possibility of requesting the continuous transmission of "1s " or of flags, and can further request message transmission in the following way:

- transmission of repeated stuffing /·state messages: it requests then a sector of "stuffing/channel state" and the logic circuit assigns it the first sector or the unused one of the two, the processor loads it and then commands "transmit stuffing/state on the indicated channel"; the logic circuit has the information on which sector is interested and starts the continuous transmission sending an acknowledgment signal to the processor only after the first time;

- transmission of any single message: the processor requests a message area, if it has none which it can dispose of; it requests the free stuffing area if it does not yet know its allocation, it loads the message and the new stuffing or state message into the corresponding sectors and commands "transmission of a single message from sector." The interface executes the command, it acknowledges it and automatically passes to the new stuffing/state message, sending the acknowledgment signal only during the first transmission;

- transmission of a message inserted into a sequence: the transmission occurs as in case of protocols X25 - X75 with the passage to flag transmission at the end. If the processor emits a new "transmit command" within 125 $\mu$s after reception of "end-of-message" signal, the two messages will be separated by a single flag.

The block denoted with DSC is represented in detail in Fig. 2.

In said figure, block denoted by BDR is the bus driver and bus receiver set, through which all the signals between interface and processor transit, via wires BBS7, BDAL0 ...19, BSYNC, BDIN, BDOUT, BWTBT, BRPLY, BIAKI, BIAKO, BIRQ.

An address pre-coding circuit for the periphery registers is present on BBS7, BDAL0...19 are bidirectional wires carrying at different times memory or peripheral-unit addresses and the data to be transferred on the bus.

BSYNC carries signal SYNC, whose leading edge indicates the presence of a valid address over wires BDAL, and whose permanence coincides with a bus cycle.

BDIN carries the reading request to the location addressed by the bus at the beginning of the signal SYNC, while BDOUT carries the writing request to the above-mentioned location of the data which have meanwhile substituted the addresses on wires BDAL.

BWTBT carries the indication that the bus cycle in progress refers to a byte and not to a word.

BRPLY carries the acknowledgment signal that the interface has carried out the requested operation.

BIAKI and BIAKO are the two wires which income into and outgo from the interrupt "Daisy chain".

BIRQ is the wire through which the interrupt is requested.

Through connections BDAL, the bus receivers and connection 5, the addresses emitted by the processor are transferred to circuits CM1 and CM2, which are the address comparators.

Wire 7 carrying the signal decoding the bank of peripheral units BS7 is connected to CM1, which detects the access requests to Registers 0, 2, 4, 6. CM2 detects the access requests to 32K memory bank, denoted by RAM. When signal SYNC appears on BSYNC, address/data lines BDAL carry the valid address and also the outputs of CM1 and CM2 are valid. Then it is possible to obtain the result of the comparison between the address emitted by the processor and the address, preset by interruptors in CM1 and CM2, of the memory bank RAM or of peripheral unitRegisters 0, 2, 4 and 6, coincident with blocks denoted in the figure by RFM, RFS plus ABI, RCM and RRC.

The signals coming from wires BDAL and present on bus 5, which correspond to the positions of the wires which carry the addresses inside the memory bank, are loaded in register RAD in correspondence with the leading edge of signal SYNC, coming through wire 8 from wire BSYNC through the corresponding bus receiver. They remain stored for the event in which the request is intended for the local memory bank. The address bits, which may serve to determine which peripheral-unit register or which byte or memory section the processor wishes to access, are carried by bus 5 to logic circuit LGA and are stored there into a register together with the results of the comparisons carried out by CM1 and CM2, present on connection 9; said storage takes place on the leading edge of SYNC, carried by wire 8, and will be cancelled on the trailing edge. If the comparisons are negative this logic circuit has no more tasks to carry out. If one of the comparisons is positive, the processor sends to LGA, which is standing by, the communication of the required operation at that address by using wires BDIN, BDOUT, BWTBT (reading, writing of a byte, writing of a word).

Still logic circuit LGA receives on wire 10 from the microprogram (present in block LMT) an inhibiting signal, generated any time control logic circuit LMT (Fig. 1) of the interface is about to access the resources of this circuit portion (registers, memory), and removed as soon as the access is terminated; this inhibiting signal is timed to avoid any incertitude and is sampled by LGA at the same time as the processor command signals. If, upon the arrival of the command, there is an inhibiting, the command itself remains in "wait state", otherwise the access is guaranteed; if the processor requests the access to the memory, LGA enables through connection 11 the output of register RAD on bus 12 addressing memory RAM and hence, depending on the command which has arrived and on the addressing bits which have been stored, through connection 13 and reading and writing logic circuit LRW it delivers the suitable enable signals and writing commands in memory RAM: in case of a reading request, LGA enables the memory section involved and loads the corresponding output into register RDUA through bus 12 and through connection 6 presents the corresponding output to the drivers of wires BDAL, enabled through wire 15; in case of writing on wire BDAL, there is now present the word or the byte to be written, LGA makes the data arrive through the TD1 gates, enabled by the signal on connection 11, at the memory input and delivers the suitable writing command through LRW. Then it generates backwards the reply signal on wire BRPLY connected to the processor, which terminates the cycle.

Since the other sources of the internal buses involved are directly enabled by the microprogram, which also generates the inhibiting signal, no command overlap can occur.

As to the access requests to registers RFM, RFS, RCM and RRC, logic circuit LGA has the information on what is the register to be dealt with; said registers are considered by the processor as read-only or write-only locations. LGA similarly as before directly acts on the enablings of RFM, RFS - ABI, RRC and on RCM clock through connection 16.

Internal data bus 14 is connected to a parity generator CGP, which is excluded upon command arriving through connection 11 from LGA, when the processor accesses the memory (as it generates the parity during writing, while the memory already contains the parity bits, generated by CGP, during the writing by the control logic circuit of LMT).

Logic LGA consists of a programmed read-only-memory with a double input register (connected in cascade, on a portion of bits), and an output register; the second input register and the output register are loaded at a sampling clock rhythm(microcycle clock). The first register serves on the contrary to load the significant variables on the leading edge of the SYNC signal coming from the processor.

Circuit RFM is the FIFO memory considered by the processor as Register 0; for its reading logic circuit LGA enables the outputs on internal data bus 14; circuit CGP calculates the parities and the whole is loaded into register RDUA. Hence LGA supplies RFM with the reading clock on connection 16, preparing the possible subsequent datum, which will be read during another cycle requested by the processor.

The same thing happens for RFS - ABI, with the difference that part ABI is an ordinary register, in which there are stored the enable signals to generate interrupts, and which consequently is not unloaded during the reading; its outputs upstream the bus gate pass through connection 17 to circuit LIRA, which is the logic circuit generating the interrupt commands.

The writing of register ABI is carried out upon a processor command through register RCM and transfer logic circuit TRA. This circuit in fact decodes the processor command which is on bus 18; when it coincides with the update command for the enable signals, their transfer is effected from bus 14 to register ABI through TRA.

When LGA decodes a writing request in RCM, this logic circuit enables gate TD1 transferring the word to be written to the input of RCM through bus 14 and consequently it delivers the clock to register RCM through connection 16. Every time the register is

loaded, flip-flop FLGA is reset and its output is transferred to register RRC. FLGA output is placed at "1" any time the register is read, and during the initialization, its meaning is of free RCM.

RRC reading by the processor takes place with the same procedure.

Circuit LIRA is the logic circuit generating the vectorized interrupt signal. LIRA receives from the wires of connection 17 data ready criteria for the read-only registers and "free register" criterion for write only register (by the processor), it receives the corresponding enable signals and the criterion of available bus, the latter from logic LGA through connection 19; when one of the "data ready" or "free register" signals is at "1" with the corresponding enabling, the circuit generates the interrupt request on connection 20 and then on wire BIRQ towards the processor. At the response of the processor on wire BIAKI, it checks the timing and emits on bus 14 the vector of the interrupt, which is loaded by LGA into register RDUA.

The access to the memory and to the registers by the other blocks of the interface is more immediate, as it is directly microprogram controlled.

To access the memory, the interface generates on wire 10 the inhibiting criterion towards LGA, it loads the address into register LAD through bus 21, it enables LAD output by a suitable signal on wire 22; as to the reading, it delivers the suitable command to LRW through connection 23 and extracts the datum on the internal data bus 14; as to the writing, it sends the datum on this bus and the suitable command through LRW.

The writing of FIFO memory RFM is immediate by sending the datum through bus 14 and the writing clock through wire 24 (FIFO memory sends backwards the "overflow" signal via wire 25).

As to FIFO memory RFS, a portion of it extracts the data from the internal bus and a portion from "channel" bus 26, which is separated. Its writing anyway occurs in the same way as before, by using the writing command on wire 28, and also in this case there is a

0100092

FIFO overflow signal sent backwards on wire 27.

Also the writing of RRC, upon command arriving via wire 29, and the reading of RCM, enabled by the signal over wire 30, are immediate. The only peculiarity is that the 4 bits of RCM, which form the command code coming from the processor do not go out the internal data bus 14, but they are directly sent to an input of the sequencer of the microprogram through bus 18.

Block LMT, represented in Fig. 3, is the microprogrammed logic circuit for transferring and controlling the data flow, whose asks are established by the microprogram stored in the programmable read-ony memory, denoted by RMP. It is dimensioned so as to contain two different microprograms (usually for controlling either the 32-channel X25,X75 or the 16 channel No. 7).

It is organized into 4 pages of 256 words each; two of them contain the first microprogram and the other two the second; the passage from one to the other is obtained through a manual switch SWT. The microprogram page, containing the subsequent instruction, is established by the microinstruction itself in a non conditioned way.

Inside each page the memory addressing is obtained by a sequencing circuit SEQ associated with two multiplexers MBT and MJC. Circuit SEQ can choose the subsequent address out of 4 different sources: microprogram counter, microprogram stack (both are inside SEQ), the direct input on bus 31, and a register with separated input on bus 18. A further input 33 is directly in OR with the outputs 34, where there are RMP addresses. Four out of the 8 wires of this input are connected to multiplexer MJC which selects one out of 8 4-bit paths. When such multiplexer is enabled by the microprogram through bus 35, selecting the input directed to SEQ as a source of the address and sending on it a suitable code, delivered by the microprogram on wire 31, there are available 8 sources of multipath jump (4, 8, 16 paths). Multiplexer MBT with 16 1-bit paths, when enabled by the microprogram through bus 36, conditions on the contrary the choice of the source of the subsequent address, in function of the value of the bit transferred to the output (bit under test). Circuits MJC, SEQ and MBT are controlled by the microprogram through connections 31, 35 and 36, already described, and connection 37. These carry the signals selecting the address source and command signals for the microprogram stack inside SEQ.

The microprogram word is written in a pipeline register RPL at each clock microcycle; the fields this word is composed of are the following:

A) Sequencing field;

B) Flag control field;

C) Control field of block ALU;

D) Control field of reading and writing in block DSC;

E) Control field of the information exchange towards block BTT; ·

F) Control field of internal registers LUM, ACC, RDA, RDB, RCS, RCL and GPT.

· Bits which are transferred to multiplexer MBT, as bits which may be microprogram controlled, are the following:

- two bits coming from input/output logic circuit towards BTT (Fig. 1) denoted by LIO (Fig. 3), through connection 38. Said logic circuit receives the clock signal from the time base contained in BTT, through connection 39. Said bits supply the microprogram with two criteria of time lock.to the operation times of the logic circuit which controls the PCM group;

- a data ready bit coming from logic LIO, still on connection 38, which indicates that a new information has been written in registers RI1, RI2, RI3 and RI4. Said registers, as registers R01, R02 and R03 are comprised in block BTT, according Fig. 1. However, to make the description clearer, they are represented together with block LMT in Fig. 3;

- a state bit of registers R01, R02, R03, still coming from LIO through connection 38;

- a state bit of FIFO memory RFM (stuffed FIFO) coming from DSC (Fig. 2) on wire 25;

- a state bit from FIFO memory RFS, coming from DSC via wire 27;

- a bit of the internal bus 26, which bus will be described hereinafter;

- two flag bits, preset by the microprogram;

- three bits loaded into the flag flips-flops, present in circuit FLC, which indicate the states of unit ALU, the arithmetic logic unit; more particularly: the carry out of the 8 least significant bits of the result, the same referred to the whole 16-bit word, and the operand equality;

- two bits of two flag flip-flops, present in circuit FLG, which are microprogram controlled and can be loaded with the two least significant bits of the internal bus 26.

They arrive from cells allocated in memory RAM (Fig. 2) through bus 14, register LUM and bus 26 and hence they allow the test of the flags stored in the registers of this logic circuit, contained in memory RAM.

Multiplexer MJC is supplied with the codes on which the microprogram can effect multi-path jumps; they are:

- a code of three bits characterizing the actual signal, coming from register RI1, connected with block BTT through a connection 74. This code can have the following meanings: first octet of received message, octet following the first, event relating to transmission, event relating to reception, transmission state, reception state. One of the bits at MJC input is maintained at zero level and the jump is composed of 8 paths, two of which are non-significant;

- a 3 bit code, coming from register RI2 on connection 41, whose meaning is a function of the preceding code; during the transmission it is the event code, with 3 significant values corresponding to: request for an octet to be transmitted, transmission terminated and underrun on the transmission. On the contrary, during the reception, the code has the meaning of number of valid bits in the last received octet;

- a 4 bit-code, coming from other points of the same register RI2 on connection 42, which represents the event code in reception, with

the following meanings: end-of-message, end-of-message with non valid frame, end-of-message with error of CRC, overrun, passage to IDLE, passage to flags and ABORT reception. Two paths are provided which allow the jump to 4-bit codes contained in the channel registers residing in the memory and to this aim they can be respectively connected to the two 4 bit blocks of the least significant byte of the internal bus 26 at the LUM output;

- a 3 bit code, coming through connection 43 from register RCS, which contains the number of residual bits of the last octet of the messages to be transmitted. This number, computed by circuit ALU, is transferred to this register through bus 21, register RDA and bus 26;

- a 3 bit code, arriving through connection 44 from circuit FLG, which comprises a flag, contained in the registers of memory RAM (Fig. 2) and transferred to this register through bus 26, register LUM and bus 14, a flag written with the carry out value of the operation effected on the low byte of the ALU through connection 45 and a flag, written with the value of the comparison between the two operands of the ALU, still through connection 45;

- a 3 bit code, coming through connection 46 from circuit FLG (2 bits) and from block BTT (1 bit). The two bits coming from FLG are microprogram flags, while the bit coming from BTT is the state of a manually operated switch which enables or inhibits the processing of channels 0 and 16 of the PCM group differently from the others, in order to allow the ordinary use provided for standard PCM groups (synchronism and signalling).

The input to internal register of sequencing circuit SEQ is directly connected through connection 18 to the control bits of the command register (RCM), present in block DSC (Fig. 2). The register is loaded at every microcycle and consequently it always contains updated information (every time the processor command is taken into consideration, the microprocessor resets the register 4 of DSC with a command on connection 47 and wire 30).

Circuit ALU (Fig. 3), which carries out the ordinary logic and arithmetic operations, has the two inputs for the two operands connected to buses 26 and 49. The first input, connected to bus 26, can receive as an operand the contents of register LUM, which in turn is loaded by bus 14 with the contents of memory cells, with the contents of control register R4 or yet, with the octet of BTT, duplicated on the two bytes of bus 14 by register RI3. This input can also receive the contents of register RDA, which can be loaded in turn with the output of ALU through bus 21, and the contents of registers RCS and RCL; RCS is a stack register of the information on this internal bus, while RCL receives the channel identity, which the information arriving from BTT refers to, from register R14 on connection 48. The most significant bit of the channel code, which is transferred by RCL on bus 26, is the test bit connected to block MBT through which the microprogram can discriminate between channel 0 and channel 16, depending on to the above mentioned different operation.

The second input of the ALU, which can receive the operand either through bus 49 from register RDB (result of a previous operation) or from the 16 bit field G, containing a constant supplied by the microprogram. Another source is GTP, a register which allows the high byte of the operand on bus 26 to be transferred to the low byte of the operand on bus 49.

The ALU output, which is the source of bus 21, can be written into register ACC, and then it can be made available to the internal data bus 14 (then also to the memory and to the registers of block DSC of Fig. 2), into RDA or RDB (i. e. returning to the ALU as an operand) or into the address register of memory LAD in block DSC.

Circuit FLG is the flag set whose functions have already been examined when dealing with the sequencing circuit SEQ.

Logic circuit LIO effects the input and output control from and towards block BTT. Depending on BTT operational times, it is to transfer the data from the output registers of BTT to registers RI1...

RI4 any time registers RI1:..RI4 are disengaged and, on connection 73, BTT signals the presence of a datum.

An acknowledgment signal is sent backwards on connection 72. The transfer from R01, R02, R03 to the input registers of BTT is similarly effected.

Registers RI1...RI4 receive from BTT 16 signals of connection 74: 3 of these, written in RI1, are the command characterization, already examined, 5 of these, written in R14, are the channel code; the last 8 of these are either the information or the received octet. Said last 8 signals are written into register RI2 and duplicated in register RI3. The content of RI2 is used for the jumps, already described, the content of RI3 is used to transfer the data octets through 16 wire bus 14.

Registers R01...R03 have opposite functions: the code characterizing the outgoing signalling, present on internal bus 49, is written in R01, which consists of 3 cells; R03, composed of 5 cells, carries the channel code, extracted from the outputs of registers RCS or RCL or RDA through bus 26; R02, consisting of 8 cells, is preceded by a multiplexer and receives through bus 14 the high or low byte of the datum word, read in the memory or generated in output register ACC of the ALU. The command of this multiplexer depends on the least significant bit of memory addressing (the commands generated by the ALU are always supplied on the low byte). The data are delivered to block BTT on bus 79 while wires 78 and 80 exchange the signals of received datum and data ready respectively.

Let us examine now block BTT, represented in Fig. 4.

Blocks LVO and LVI (Fig. 1) can generate two messages for LMT during each PCM time interval, and, in opposite direction, they can accept two messages from LMT. During the routine operation, i.e. when the phases of beginning and end of a message are not in progress, and the channels are busy, the operations to be carried out at each time slot are generally the following ones: logic LVI communicates a received octet, logic LVO requests an octet to be transmitted, logic LMT communicates the requested octet.

Said operations are carried out by LMT within the time slot and hence do not generate message queues.

Still at the beginning and at the end of a message, logic circuit LMT cannot sometimes carry out all the operations in time, and then, in these cases, it accepts an only message; at the end of a message to be transmitted, it generates then two items of information towards the line logic circuit (last octet and signal of end-of-message). This makes the temporary accumulation of signallings possible, which is recovered during the transmission of flags and octets of CRC, in the channel time slots, in which, owing to stuffing, the octet is not completed, during the free channel time slots and during the reception of flags and CRC.

Temporary buffers, FIFO organized, are provided in block BTT for this purpose; the first of these buffers is the FIFO for the received octets FOR, which is associated with an ordinary reading and writing logic circuit LW1, which receives the octet from LVI on connection 60 and the identity of the channel the octet is referred to on connection 61 from the time base, this too comprised in this block; logic circuit LW1 exchanges the usual writing signals with LVI through the wires of connection 62.

The second buffer is FIFO FSR, which receives from LVI through connection 63 the messages relating to the channel states (states, events); writing in this FIFO is controlled by logic LW2, which receives the corresponding commands from block LVI, still through connection 62. The third buffer, denoted by FST, receives from LVO on connection 64 the state of the outgoing channels, which carries also the writing command signals to the writing control logic circuit LW3. FST receives as inputs also the transmission channel code on connection 65, still from the time base of block BTT. The outputs of these 3 FIFOs converge into a bus 66, connected also directly to blocks LVI and LVO, for the reception of these signals which do not need a temporary storage.

The presence on bus 66 of a message to be communicated to block LMT is signalled through the wires of connection 67 of a priority encoder CLM. In particular, a signal coming from LVI through connection 68, FIFO memory FOR and a proper wire of connection 67 informs it that the received octet is the first of a message.

Circuit CLM chooses which message to forward to logic circuit LMT and loads the corresponding source code, together with the request bit, into register REL, through connection 69. The message transmission request is sent to logic circuit CSU, controlling the exchange with LMT, by REL, on wire 70. CSU verifies through wire 72 whether LMT is ready to accept the message. If LMT is available, CSU writes in the register RDU the message present on bus 66 and the source code present on bus 71 and forwards both to LMT on bus 74, sending the transfer command on wire 73. To carry out in register RDU the writing of the message selected by CLM, the source code present on bus 71 is also sent to the circuit DAS, which decodes the enable signals of the message sources on bus 66 (FOR, FSL, FST and the connections towards LVI and LVO). On connection 75 the decoding circuit DAS enables the source selected on bus 66. The same source code is used also by decoding circuit DFS to communicate to the source on connection 76 the signal of occurred exchange, which causes the cancelling of the message. This signal is communicated by CSU to DFS through wire 77.

The control of the data transfer from LMT to BTT is similar to the preceding case, but it requires no temporary storage, as the data are controlled in real time. The exchange control circuit for the incoming data CSI enables in suitable time phases, through wire 78, block LMT to supply the message. LMT transfers this message on bus 79 and through wire 80 communicates the message presence to CSI. The message containing its destination code is written into register RDI by CSI. Said code is sent to decoding circuit DLM by RDI, through connection 81. DLM through the wires of connection 82 effects the transfer of the message recorded in RDI towards the addresses in blocks LVI and LVO. The message data are sent to the addresses on bus 83.

Time-base circuits, present in BTT, are clocked by a voltage-controlled oscillator associated with a frequency and phase-locked loop PLL. The oscillator generates the basic interface frequency of 8.192 MHz, equal to four times the PCM frequency of 2.048 MHz, present on wire 88. Through a scale of 4 circuit contained in PLL and the frequency- and phase-locked loop, the basic frequency is slaved to PCM frequency in order to ensure 4 periods each PCM time interval.

The incoming channel codes are reconstructed through counters CBR and CCR synchronized by the incoming PCM alignment signal, present on connection 3 (Fig.1), as well as the outgoing channel codes, through counters CBT and CCT synchronized by outgoing PCM alignment signals.

The latter operation is carried out only when the alignment signal is generated outside the interface and is also available on connection 3.

The four phases are generated inside each PCM clock period through counter CTP and decoding circuit DTP; the time slots 0 and 16 are decoded at the input through circuit TSR and at the output through circuits DCT and TST. Wire 86, connected to the manual switch COM, may enable or not these decoding circuits in function of the use of channels 0 and 16 in the transparent or non-trasparent way, as seen. TST sends the transparency signal to LVO through wire 91; TSR emits the same signal towards LVI through wire 92.

Moreover, pulses having a duration equal to that of PCM bits are generated by decoding respectively the outputs of counter CBT with the decoding circuit DBT and the outputs of counter CBR with decoding circuit DBR.

In particular the outputs of DBT are sent through connection 87 to circuits TCI and TCU generating the sampling phases of messages interchanged with LMT.

Finally, circuits LIT and LIR carry out the initialization check respectively of logic circuits LVO and LVI through the signals sent on connections 89 and 90, by identifying the first PCM frame following the interface activation.

The signals present on connections 87, 93, 94 and 95 are the time-base pulses which are distributed to all the interface circuits.

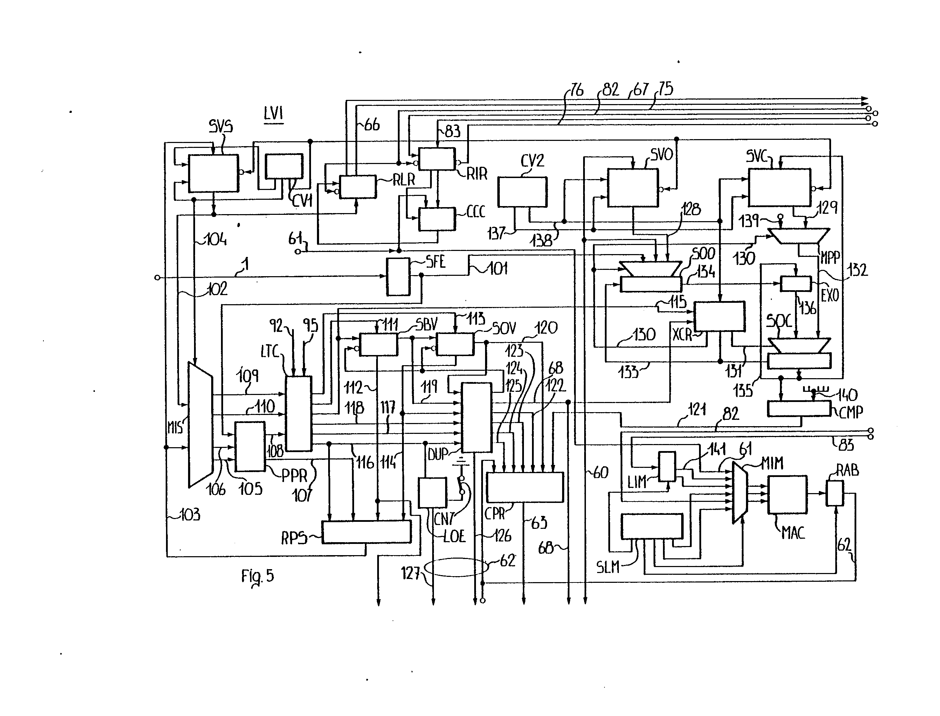

Block LVI is shown in Fig. 5.

The serial PCM group, arriving at this block on wire 1, is transferred to a bit sampling and synchronizing circuit SFE, and then is sent through wire 101 into two different directions: the first direction is towards the PROM PPR of the operative logic circuit, the second direction is towards a shift register SOO, which assembles the message octet.

The situation which was present on the same channel after the last bit of the preceding frame is present at the output of the vertical shift circuit SVS at each time-slot beginning.

SVS consists of n. 32-cell shift-registers connected in parallel, in order to allow the contemporaneous shifting of a n-bit word, which is the channel state word. That state word is sent to the operative logic circuit, which is basically a synchronous finite state automaton , whose input signals can arrive from SVS through bus 102, or from its outputs through bus 103. The choice between the two inputs is effected by multiplexer MIS, controlled by the signal present on wire 104, coming from logic circuit CV1 for the writing and reading of SVS. PROM memory PPR receives as inputs, besides the already mentioned wire 101, the connection 105 from multiplexer MIS which carries the channel state word and the connection 106 which carries the number of already-received bits at logic level 1.

The outputs of PPR are divided into two connections: through connection 107 the updated number of consecutive bits at logic level 1 is sent towards the register RPS, by connection 108 the new state of the channel is sent to logic circuit LTC. This logic circuit still receives from multiplexer MIS through connection 109 the code which indicates the number of valid octets of a message, which have already been received by the processed channel and through connection 110 the code which indicates the number of valid bits, which have already been received, of the present octet.

As a rule, logic circuit LTC presents at its outputs the same states as at the inputs. Only while processing channels 0 and 16 and only if the transparency of such channels is requested, it arranges its outputs so as to avoid the protocol processing. This is made by using the commands coming on wires 92 and 95 (coinciding with the homonymous wires of fig. 4).

The updated state code outgoes from logic circuit LTC on bus 116 and is transferred to RPS.

Circuit SBV increments the code of valid bits, which code arrives from LTC on connection 111. The result is sent to RPS on connection 112.

SOV increments the code of the valid octets, which code arrives from LTC on connection 113. The result is sent to RPS on connection 114.

Logic circuit LTC sends through wire 115 the signal of valid bit to be assembled to the assembling circuits of the octet.

The new-state word is written into the register RPS at the end of each bit time; if the next bit time still belongs to the same channel RPS content is represented to the operative logic circuit through connection 103 and multiplexer MIS. If on the contrary the subsequent bit time belongs to the subsequent channel, the content of RPS, through connection 103, is retransferred to the input of SVS and the operative logic circuit, through connection 102, receives as input the new-channel state.

At each bit time, decoding circuit DUP receives the output signals of LTC, present on bus 116, which represent the updated state, the output signal present on wire 117, which informs it that seven consecutive bits at logic level 1 have been received, and the output signal present on wire 118, which has the meaning of "received flag of beginning" or of "end-of-message" (see protocols X25 X75, CCITT n. 7 and the like). Besides decoding circuit DUP receives the code of number of received valid octets, which is present on bus 114, the signal of octet completed, coming from SBV via wire 119 and the signal of valid frame (see the protocols above) coming from circuit SOV via wire 120.

The decoding circuit DUP then detects the significant events on the channel. They are:

- reception of the first octet of a message, signalled on wire 68;
- end-of-message, signalled on wire 122;
- passage from "idle" state to "flag reception", signalled on wire 122;
- passage to "idle" state, signalled on wire 124;
- reception of an "abort" flag, signalled on wire 125;
- reception of complete message octets subsequent to the first, signalled on wire 126.

Logic circuit LOE, when activated by the manual switch CN7, controls the state code present on bus 116 and, when this state is "idle", signals on wire 127 the presence of an octet which does not belong to a message. That is necessary during the phase in which octets are counted, according to the diagnostics of protocol CCITT n. 7.

Wires 68, 120, 122, 123, 124, 125, 62 (which comes from block BTT of Fig. 4 and carries a signal of unavailability of FIFO memory FOR to receive new octets) and wire 121, coming from the control circuit of message redundancies (which will be described hereinafter), are sent to encoder CPR. This delivers the information to be transferred to FIFO memory FSR (Fig. 4) on the output connected to bus 63. The code outgoing from circuit SVB is transferred to said FIFO through bus 112.

Wires 126 and 127, belonging to bus 62, signal the presence of octets to be loaded to logic LW1 (Fig. 4) controlling the writing of FIFO memory FOR. If the octet is the first of the message, a suitable signal is supplied to logic BTT on wire 68. The octet to be loaded is in turn present on bus 60, coming from the character assembling circuits. Said circuits serve to reconstruct bit by bit the message

- 33 -

octets (circuits SVO and SOO) and the corresponding redundancy character (circuits SVC, MPP, EXO, and SOC).

SVO consists of 8 shift-registers, consisting of 32 cells connected in parallel and allows the storage of the last 8 valid bits received on the channels. The bits received in non "idle" channel state are considered valid, provided they are not the zeros following 5 consecutive bits at level 1.

SVC is a circuit analogous to SVO, but for 16-bit words and contains, as will be seen hereinafter, the partial result of the check on correctness of the transmitted message with CRC redundancy. This partial result is referred to the bits received before the 8 bits stored in SVO.

At the beginning of each time slot the situation of the already received bits is transferred from the output of SVO to one of the inputs of SOO through bus 128 and the partial result of correctness check is transferred from the output of SVC to an input of multiplexer MPP through bus 129.

At that instant, logic XCR positions by signals on wires 130 and 131 the input multiplexer of circuit SOO on the path coming from bus 128, the multiplexer MPP on the path coming from bus 129 (thus the word coming from SVC transits in bus 132), and the input multiplexer of circuit SOC on the path coming from bus 132. Then logic circuit XCR emits the writing command into the registers contained in circuits SOO and SOC, which then contain the situation of the channel which is about to be received.

The path connected to the other input of the input multiplexer of circuit SOO consists of bus 60, which receives the output of the register contained in SOO itself. The wires of bus 60 are connected to this input shifted by a position with respect to their output position. The re-writing of the datum through this input entails then the shift towards the right by a position. The input, which remains free, is connected to wire 101, which carries the new bit coming from PCM group. The information that the bit present on wire 101 is valid arrives via wire 115 at logic circuit XCR, which commands through wires 130 and 133 a re-writing operation in SOO through the input connected with bus 60.

This operation implies one position shift for the 8 bits and the writing of a new bit. The bit lost by SOO is transferred to circuit EXO on wire 134.

The re-writing procedure with shift in SOC (through bus 135) is analogous to that described for SOO, with the difference that the outputs of the register present in SOC transit through circuit EXO before arriving at the input of the input multiplexer of SOC on bus 136. Circuit EXO realizes the algorithm for computing the redundancies, according to the procedures of the cited protocols.

After the described operations have been effected on the last bit of that channel, the contents of the registers present in SOO and SOC are re-transferred respectively to the inputs of SVO and SVC through buses 60 and 135.

The shift in circuits SVO and SVC is controlled by logic circuit CV2 through wires 137 and 138.

When the start of a message is signalled to logic XCR via wire 68, XCR, through commands on wires 130, 131 and 133, writes into the register of SOC the initialization word for the redundancy computation, present on an input of multiplexer MPP connected to bus 139. This bus: exclusively carries the initialization word above, permanently fixed at its inputs.

When decoding circuit DUP emits on wire 126 towards BTT (Fig. 4) the signal of ready octet, such octet is available on bus 60 as an output of the register present in SOO.

Circuit CMP effects the comparison between the CRC word present at the output of circuit SOC on bus 135 with the code fixed on bus 140. The comparison result is forwarded to the encoder · CPR via wire 121.

At the end of the message this result is to be of equality to confirm that a correct message has been received.

Random-access memory MAC containing 32 bits is associated with block LVI. Each bit is associated with a channel and represents the enabling or inhibiting of the channel itself. The random writing is controlled by block BTT (Fig. 4) through wire 82, while the addresses and the data are present on connection 83. MAC is cyclically read at the address of the incoming channel arriving from BTT on bus 61.

Register LIM temporarily stores the writing address and the datum to be written and forwards them to multiplexer MIM on connection 141. Logic circuit SLM for writing and reading in the memory selects the access time phases, so as to control the reading in the position of the current channel at its beginning, and to store the contents of the corresponding cell in register RAB for the whole time slot. It controls on the contrary the writing in memory whenever there is the corresponding command over wire 82, at the end of the reading operation.

The possible inhibiting, written in register RAB, does not affect the operative logic circuit of block LVI, but it is sent to block BTT through connection 62 to inhibit the forwarding towards block LMT of a possible information corresponding to that channel.

A register, denoted by RIR, receives from BTT on connection 83 the channel code, the state of which has possibly been requested by block LMT. When this register is written, its outputs are compared with the current channel, supplied to the circuit by time base, by comparator CCC; when a coincidence takes place, the state present at the output of SVS is forwarded to BTT through register RLR and the bus 66; if the message can be accepted by block LMT, registers RIR and RLR are reset, otherwise the message is maintained by RLR and presented again to the subsequent frame.

The commands for registers RLR and RIR arrive from connections 67, 75, 82, 76.

Block LVO, shown in Fig. 6, generates the outgoing PCM group, locked to the channel times generated by the time base present in block BTT.

The situation, which was on the channel itself after the last bit of the preceding frame, is present at the output of a circuit of vertical shift SVT at every start of an outgoing channel time.

The structure of SVT is equal to that of the vertical shift SVS contained in block LVI (Fig. 5).

The state word is transferred to the operative logic circuit, which is still basically a finite state automaton, whose input signals may arrive from SVT through bus 150 or from its outputs, through bus 151. The choice between the two inputs is effected by multiplexer MIT, controlled by the signal present on wire 152, coming from logic circuit CV3 for the reading and writing of SVT.

The outputs of multiplexer MIT, with the exception of those present on connection 153, go to logic circuit LTT. This circuit usually presents again on its outputs the same state as at the inputs. Only during the processing of channels 0 and 16, and only if the transparency of such channels is requested, it sets its outputs so as to avoid the processing of the protocol. That is made by using the commands on wires 87 and 91 coming from block BTT.

PROM memory PTT for processing the protocol receives at the input, besides the signals coming from logic circuit LTT representing the channel state, also the command code of the operations to effect on the outgoing channel. This command code comes from register RMC over wire 154.

PROM PTT supplies at the output:
- the updated channel state code on connection 155;
- the signals controlling bit by bit the transmission on the outgoing PCM group 2, made available on connections 156, 157, 158;
- signals controlling the acquisition of the octets to be transmitted, on wires 159 and 160,
- the signal of "end-of-transmission" of the message which is forwarded to block BTT, on connection 64;
- the signals controlling the counting of the transmitted valid bits, on wires 161 and 162.

The counting of valid bits is carried out by the incrementing circuit SBT which receives the code to be incremented on connection 163 coming from multiplexer MSB and supplies the result on connection 164. In addition, it supplies the "end-of-transmission" signal of a complete octet on wire 165.

As the protocol admits the possibility for the last octet of the message to consist of a number of significant bits lower than 8, the input 163 of SBT is connected to multiplexer MSB. MSB usually presents the partial result of the counting coming from connection 153 to SBT; at the beginning of the last octet to be transmitted, it presents on the contrary the counting code corresponding to the actual number of significant bits, to be transmitted in this particular case.

The presence of the last octet is detected by the circuit DUO, which receives the control code from bus 154, and the signal of a new octet starting on wire 160 from PROM PTT. Circuit DUO controls the switching of multiplexer MSB through wire 167 towards bus 166, coming from register RMC, on which, as will be seen, there is in this case the code representing the number of bits of the residual character to be transmitted.

The operative logic circuit finally contains the increment circuit SUC which receives on bus 168 the number of consecutive bits at logic level 1 already transmitted and on wire 169 the logic value of the bit to be transmitted. SUC finally supplies on bus 170 the updated value of the number of consecutive bits at logic level 1 transmitted on the current channel.

At the end of each bit time the updated situation, corresponding to the current channel, is stored through buses 155, 170, 164 and wire 165 in register RPT and is brought back to the input of multiplexer MIT through bus 151. If the processed bit is the last of the current channel, the updated situation is brought back, still through bus 151, not to the input of MIT, but to the input of vertical shift-register SVT, where it is stored.

At the same time, bus 150 brings to the input of the operative logic circuit the new output signal of SVT, which is the state of the subsequent channel.

The writing and reading in the vertical shift-register SVT is carried out in the above-cited times by logic circuit CV3, which is directly controlled by the signals delivered by the time base.

The control codes, as well as the octets to be transmitted, arrive from block BTT on bus 83, whilst the corresponding writing commands arrive on connection 82.

Bus 83 carries, besides the control code or the octet, also the number of the channel this code or octet is referred to.

Two random-access memories MEO and MEC of 32 words (one for channel) store respectively the octets and the control codes coming from BTT on bus 83.

Memory MEO can be written both by block BTT, and locally. The local writing serves only to reset the cell from which the octet to be transmitted has been extracted. Analogously, memory MEC can be locally written, besides being written by block BTT. The local writing serves only to impose a command with the meaning of forced end of the message, after the lack of a new octet to be transmitted (underrun).

Memories MEO and MEC are ciclically read at the beginning of each time slot on the basis of a locally generated address, and their contents is stored in registers RMO and RMC respectively.

The operation sequence of these memories is the following:
- at the end of each time slot CIM sets into the bus 179 the code of the subsequent channel, by simply incrementing the code of the current channel, present at its inputs on bus 65; at the same time, logic circuit XRL, directly controlled by the time base, positions via wire 173 multiplexer MI0, so as to transfer onto the addressing bus 172 of memories MEO and MEC the code present on bus 171;
- thus at the beginning of a new time slot it is possible to immediately effect the reading in the two memories, storing in RMO the octet arriving from the output of MEO through bus 174 and in RMC the control code coming from the output of MEC through bus 175;

- after the reading operation, counter CIM decrements by presenting again the code of the preceding channel to allow the possible local writing of memories MEO and MEC, whenever it would be necessary. In fact, if during the preceding time slot an octet has been extracted from register RMO, logic circuit LSO, which will be described afterwards, emits on wire 176 the cancelling command of the same octet in the memory; the logic circuit XSM uses the signal present on wire 176 to generate a writing pulse at the output connected via wire 177 to multiplexer MIO. MIO transfers said pulse to the output connected to the writing input of memory MEO. Analogously, if during the preceding time slot an "underrun" has taken place, logic circuit LSO sends to a logic circuit FMA the command of forced end of the message through wire 179. This logic circuit emits at its output connected to wire 180 a command for the logic circuit XSM. XSM, in turn, generates at the output connected to wire 181 a writing pulse which arrives at memory MEC through multiplexer MIO and wire 182. During this operation of local writing the input data to the memories are maintained at zero level;

- afterwards, logic circuit XRL controls through wire 173 the switching of multiplexer MIO. In this way the addresses coming from BTT through connection 83 are transferred onto bus 172; the writing commands also coming from BTT through connection 82, are transferred onto wires 178 and 182. Thus block BTT can write into memories MEO and MEC the same data it presents on bus 83;

- at the end of the time phase in which BTT directly accesses the memories, counter CIM is updated with the value of the code of the current channel. At the end of the channel time the operations above begin again in the described order.

Now the part of transmission of character and of generation and transmission of redundancies, of "flags" and of the "stuffing" bits will be described.

When a message is to be forwarded on a channel, block BTT writes into memory MEC the command code of "message transmission" by using the procedure examined before. This command code is transferred to the register RMC at the beginning of the time slot. Through connection 154 the output signal of register RMC is brought to the operative logic circuit. This circuit, once detected the transmission command, selects through connection 156 multiplexer MFU so as to transfer to its outputs the signals present on wire 158. This wire coming from PROM memory PPT, carries the bits forming the flag of message beginning generated in function of the state inside the operative logic circuit, corresponding to that channel.

Meanwhile logic circuit LSO, which through connections 155 and 187 receives respectively the code of the channel state before the operation on the bit (already described during the description of the operative logic circuit) and the code of updated state, by emitting on connection 64 towards block BTT the first request of octet to be transmitted. PROM PPT signals on wire 159 to logic XCT the message beginning.

The message transmission takes place with a procedure which uses circuits which are quite similar to those described when speaking of message reception in block LVI (Fig. 5).

Said circuits in fact consist of:

- an octet vertical shift-register SOT, equal to circuit SVO;
- a vertical shift-register SCT for CRC redundancies, equal to circuit SVC;
- multiplexer MCT, which as to functions and structure is equal to multiplexer MPP;
- the register SHO with an input multiplexer, which generates a shift to the right of the octet, is equal to register SOO, as to structure, but it is different in the way it is loaded;
- register SHC with an input multiplexer, which performs the shift to the right of the redundancy character through circuit EXT, is equal to register SOC which carried out the same function through circuit EXO;

- logic circuits XCS and XCT, which control these circuits in an analogous way to logic circuit XCR;

- multiplexer MOT, which allows     character writing into register SHO either from the outputs of register SOT or from the outputs of register RMO. This multiplexer does not correspond to any circuit of block LVI.

Hence also in this case the situation of the new channel is present at the outputs of circuits SOT and SCT and is sent to the remaining    circuits    on    buses    184    and    193    respectively at the beginning of each time slot.

This situation at the end of the time slot is sent again to the inputs of circuits SOT and SCT through buses 191 and 192.

The operation of these circuits relating to a channel is now going to be described, neglecting the description of the cyclical read-write operations of circuits SOT and SCT, controlled by logic circuit CV4, in turn directly controlled by the time base.

When logic circuit XCT receives the signal of message beginning, as described, it switches through a command on wire 188 multiplexer MCT on bus 190, on which the predetermined code of initialization of the CRC word is present. Such a code, transferred by MCT on bus 189, is written in register SHC.

Once the flag transmission is over, the first octet to be transmitted is to be available at the output of register RMO.

PROM PTT controls the transfer of this octet to register SHO through bus 183, multiplexer MOT and bus 185. For this purpose it emits on wire 160 a signal towards XCS and XCT. These two logic circuits position multiplexer MOT through wire 188 and the input multiplexer of SHO through wire 194 and emit the command of parallel writing in the same register SHO with a command on wire 195. Meanwhile, on connection 156 PROM PTT switches multiplexer MFU to wire 196, which is connected to the serial output of register SHO, and, through connections 155 and 187, informs logic circuit LSO of the occurred transfer.

Logic circuit LSO generates the request for a new octet towards BTT on connection 64. Logic circuit XCS carries out the shift to the right of the octet present in SHO through the commands on connection 156 generated in a time slot of PCM group by PROM PPT. The successive bits, forwarded over wire 196, are carried to multiplexer MFU for transmission and to circuits EXT and SHC for the CRC computing.

The bits transmitted in this way, which are present at the output of MFU, are retransferred by wire 169 to the operative logic circuit, which checks the number of consecutive bits at the logic level "1".

Whenever this number attains value 5, the operative logic circuit interrupts the serial transmission of the octet and switches the multiplexer MFU to wire 158, on which PROM FPT forwards a logic zero towards the line (stuffing). Hence it resumes the octet transmission.

The bits which are being transmitted are present on wire 169, connected to the flip-flop SFU, which synchronizes the bit flow with a suitable pulse arriving from the time base. The outgoing PCM group is present at the output of SFU, connected to wire 2.

The operative logic circuit counts the transmitted valid bits and whenever it detects the occurred transmission of a complete octet, carries out with the already described procedure the transfer of the new octet to be transmitted from RMO to SHO and sends the criterion of request for the new octet to logic circuit LSO.

When BTT has transferred the last message octet to memory MEO, it replies to the further request for an octet generated by LSO writing in memory MEC the command code of "end-of-message" and the number of valid bits contained in the last octet.

The operative logic circuit finds said information on connections 154 and 166, outgoing from register RMC. Circuit DUO and increment circuit SBT cause the communicated bit number to be transmitted through multiplexer MSB. At the end of this transmission PROM PPT sends to BTT on wire 64 the end-of-message signal, as acknowledgment signal, and switches through connection 156 multiplexer MFU to the input connected to wire 198, arriving from the serial output of register SHC. This register now contains the CRC word which is to be transmitted at the end of the message.

PROM PPT sends on wire 157 a command to circuit EXT to interrupt the computing of the CRC word, which is forwarded bit by bit over wire 198.

At the transmission end of the 16-bit CRC word the operative logic circuit recovers the flag transmission state, which it executes as described for the message beginning.

By a suitable command logic circuit LMT (Fig. 1) through block BTT, can require the logic circuit LVO to effect the message end without the subsequent transmission of the CRC redundancies.

In this case the operative logic circuit at the end of the transmission of the last octet, directly generates the end flag. This is aimed at the obtention of a method of diagnosis of the logic circuit through tests on a channel connected to itself as a loop.

Besides the already examined commands, BTT can write in memory MEC also the commands of "continuous flag transmission" "abort-flag transmission" or "idle-state transmission". In these cases, the bits to be forwarded on the line always arrive from PROM PPT through wire 158 and multiplexer MFU.

As in block LVI, also in this block register RIT is present which receives from BTT on connection 83 the channel code, the state of which may have been requested by block LMT. When this register is loaded, its output signals are compared by comparator CUT, with the current channel code, supplied by the time base on connection 65. In case a coincidence takes place, the state present at the output of SVT is forwarded to BTT through register LRT and bus 66. If the message can be accepted by block LMT, registers RLT and RIT are reset to zero, otherwise the message is maintained by RLT and presented again at the subsequent frame. The commands for registers RLT and RIT arrive from connections 67, 75, 82 and 76.

The above description has been given only by way of example and not in a limiting sense. Variations and modifications could be made while remaining within the scope of the invention.

Claims

1. A multiple communication interface between processor and digital transmission means, such as a 32-channel 64 kbit/s PCM group belonging to a data communications system, which operates as a processor peripheral unit, which is able to control the group channels as communication bidirectional paths between the processor and other nodes of the system, each path being usable for the exchange of data organized into messages according to dialogue procedures of the high level type, and which comprises:

- a first plurality of circuits (LVI), for the simultaneous processing of incoming channels;

- a second plurality of circuits (LVO), for generating the outgoing channels;

- a third plurality of circuits (BTT), for the temporaneous storage of the information arriving from said first ensemble of circuits and the transfer of information arriving from a microprogrammed logic unit (LMT), towards said second circuit plurality;

- a fourth plurality of circuit (DSC) for message storage and the exchange of information with the processor;

- a fast microprogrammed logic unit (LMT), able to control allocation in the memory of incoming and outgoing messages to transfer in real time the data from the memory to transmitting circuits and from the receiving circuits to the memory, to count the significant bits of each received or transmitted message, to check the compatibility of the number of bits of each message with the rules of the used dialogue procedure, to signal the processor the occurred reception of the messages, the events on the communications paths and their transitions, to interpret and carry out the commands coming from the processor, such as the transmission order of a message, enabling and inhibiting of the communications paths, transition on communications paths, requests of availably of a memory area into which to load a message to transmit, filtering and generation of stuffing messages.

2. A multiple communication interface as in claim 1, characterized in that said first plurality of circuits (LVI) comprises:

- a single operative logic circuit (PPR, LTC, SBV, SOV, DUP, EXO) for all the channels, which realizes in an independent way, for each of them, the algorithms of the dialogue procedure for the incoming bit flow of the PCM group to the levels of recognition of the beginning and end of the messages, of aborted message, of the idle or active state of the channel, of the validity of the message, of the correctness of cyclical redundancies, of the elimination of the stuffing bits, of the assembling into octets of the received data, and of the recognition of the length of the residual character, which operates in time sharing on the successive channels of the group, causing for each of them the evolution of an internal state consisting of a bit sequence comprising for each incoming channel the last 8·bits received, the partial result of the check computation of cyclical redundancies, and all information relating to the preceding events on the channel which are significant for the algorithm of the procedure, as well as the bit in reception over PCM group, which effects operations which are only function of the bit sequence instantaneously applied to its inputs and contains means apt to decode the states corresponding to events to be signalled to the rest of the interface;

- some registers (RPS, SCO, SOC) apt to contain the bit sequence forming the instantaneous state of an incoming channel, which can be re-written with the results supplied by the operative logic circuit at the rhythm of bit reception on PCM group;

- some means (CV1, CV2) apt to replace in said registers in synchronism with the incoming channels, the bit sequence relating to the instantaneous state of the ending channel with the analogous sequence relating to the beginning channel;

- some means (SVS, SVO, SVC), apt to store the instantaneous states of non-current channels without requiring any read and write addressing as they are based on the cyclical shift of the information in synchronism with the incoming PCM group.

3. Multiple communication interface, as in claim 1, characterized in that said second plurality of circuits (LVO) comprises:

- single operative logic circuit (LTT, PPT, SUC, MSB, SBT, DUO, EXT) for all the channels, apt to act on a bit sequence forming the instantaneous internal state of an outgoing channel, said sequence consisting of an octet of transmission data, of the code of the last command received by the rest of the interface, of the partial result of the computation of the cyclical redundancies, of a state code comprising the information corresponding to the previous events on the channel, and to realize for said sequence the algorithms of the dialogue procedure by generating at each time slot of the outgoing PCM group the logic value of the bit to be transmitted and the new instantaneous state of the channel, to work in time sharing on the subsequent group channels by executing for each of them the operations of beginning and end of the messages, of possible transmission of the criterion of aborted message, of request to the rest of the interface of the octet to be transmitted, of recognition of the length of the residual byte, of possible end of message without redundancies;

- some registers (RPT, SHO, SHC), apt to contain the bit sequence forming the instantaneous state of an outgoing channel, which can be re-written with the results furnished by the operative logic circuit at the rhythm of bit transmission on PCM group;

- some means (CV3, CV4) apt to replace in said registers, in synchronism with the outgoing channels, the bit sequence relating to the instantaneous state of the ending channel with the analogous sequence relating to the beginning channel;

- some means (SVT, SOT, SCT) apt to store the instantaneous states of non-current channels without requiring any read and write addressing, as they are based on the cyclical shift of the information in synchronism with the incoming PCM group;

- some means (MEO, MEC), capable of storing the future octet to be transmitted on each channel and the last command received by the rest of the interface.

4. Multiple communication interface as in claim 1, characterized in that said fourth plurality of circuits (DSC) comprises:

- a memory with a double access path (RAM), which is addressable as a processor memory through one of these paths and as a local memory through the other, which is designed to contain the data arriving at and leaving from the 32 channels of PCM group, and to allow the data transit, from one to the other, without requiring internal transfers, and which contains in addition the work information necessary to the operation of the microprogrammed logic circuit (LMT) of the interface itself;

- some circuits of access to said memory (LGA, RAD, LAD), able to always insure the possibility of access without wait at the circuits of said microprogrammed logic circuit, independently of the duration of the reading and writing cycles of the processor;

- some means of exchange of service information with the processor (RFM, RFS, RCM, RRC), which can be addressed and accessed by the latter as locations of a peripheral unit and are associated with circuits that allow the dialogue operation with the technique of program interrupt by the interface or with the scanning technique by the processor, such means being organized into registers and FIFO memories to render independent the access times to them by the processor and by the interface logic circuit.

5. Multiple communication interface as in claim 1, characterized in that said fast microprogrammed logic circuit (LMT) comprises:

- a read only memory (RMP), containing microprograms, which can be selected through a manually-operated switch (SWT), in function of the specific dialogue procedure;

- a sequencing logic circuit (SEQ, MJC, MBT, FLG) generating the subsequent microinstruction address in function of commands supplied by the microprogram itself, of codes coming from the processor, of codes contained in the double access path memory (RAM) and of codes coming from said first plurality of circuits (LVI) and from said second plurality of circuits (LVO) through said third plurality of circuits (BTT);

- an operative logic arithmetic unit (ALU);

- a plurality of operative registers (LUM, ACC, RDA, RCS, RCL).

6. Multiple communication interface as in claim 1, characterized in that it comprises means (LTT, LTC, TSR, TST) apt to allow the use of channels 0 and 16 in a transparent way, in function of the positioning of a manually-operated switch (COM), executing in both directions a direct transfer from memory location to channel and vice versa without using the algorithms of the procedure on the data they carry.

Fig. 1

Fig. 2

Fig. 3

LMT

0100092

BTT Fig. 4

Fig. 5

0100092

LVO
Fig. 6